# EUROPÄISCHE PATENTSCHRIFT

(11) **EP 0 949 163 B1**
(45) Veröffentlichungstag und Bekanntmachung des Hinweises auf die Patenterteilung: **17.09.2003**
(21) Anmeldenummer: 98890097.3
(22) Anmeldetag: 07.04.1998
(51) Int. Cl.: B65G 17/02, B65G 21/04, B65G 39/20

(54) **Anlage zur Förderung von Gütern mittels eines endlosen Förderbandes od.dgl.**
Installation for conveying goods by means of an endless conveyor belt or similar
Installation pour le transport de produits au moyen d'une bande transporteuse sans fin ou similaire

(43) Veröffentlichungstag der Anmeldung: 13.10.1999
(73) Patentinhaber: Innova Patent GmbH, 6960 Wolfurt (AT)
(72) Erfinder: Trieb, Herbert, 6922 Wolfurt (AT)
(74) Vertreter: Atzwanger, Richard, Dipl.-Ing. Patentanwalt

(56) Entgegenhaltungen:
- EP-A- 0 745 545
- DE-A- 2 540 483
- DE-A- 3 426 106
- DE-C- 858 706
- US-A- 4 674 627

## Beschreibung

Die gegenständliche Erfindung betrifft eine Anlage zur Förderung von Gütern bzw. von Personen mittels eines in sich geschlossenen Förderbandes od.dgl., welches an den beiden Enden der Anlage über Umlenktrommeln geführt ist und welches mit in Förderrichtung voneinander im Abstand befindlichen sich quer zum Förderband erstreckenden Trägern ausgebildet ist, an deren beiden Enden Rollen gelagert sind, welche längs Trageinrichtungen abrollen, wobei das obere Trum des Förderbandes od.dg1. an der Unterseite der Träger angeordnet, die Rollen auf der Oberseite der Trageinrichtungen abrollen, weiters die Träger als einstückige Balken augebildet sind und das Förderband als Wellkantenförderband ausgebildet ist, wobei sich die Abschnitte der Wellkanten zwischen den Balken befinden und deren Enden an den Seitenflächen der Balken befestigt sind.

Bekannte Förderanlagen bestehen aus einem in sich geschlossenen, an den beiden Enden über Umlenkwalzen geführten Förderband und aus unterhalb des oberen Trumes des Förderbandes angeordneten Tragwalzen, an welchen das Förderband zur Auflage kommt. Dabei muß das Förderband hinreichend zugfest ausgebildet sein, um einerseits die durch die Förderbewegung bedingten Zugkräfte und andererseits die durch das Gewicht des Fördergutes auf dieses ausgeübten Zugkräfte aufzunehmen. Die durch das Gewicht des Fördergutes verursachten Zugkräfte im Förderband sind umso geringer, je geringer der Abstand der sich unterhalb des oberen Trumes des Förderbandes befindlichen Tragwalzen ist. Da weiters bei derartigen Förderanlagen die Tragwalzen gegenüber dem Förderband nicht nur abrollen, sondern das Förderband über die Tragwalzen gleitet, wird auch hierdurch eine hohe Zugbelastung des Förderbandes bedingt. Zudem wird hierdurch eine Abnützung des Förderbandes verursacht.

Bei bekannten derartigen Förderanlagen besteht das Erfordernis, entweder das Förderband mit einer sehr hohen Zugfestigkeit auszubilden, wobei sich die Tragwalzen in großem Abstand voneinander befinden können, wodurch über die gesamte Länge der Fördervorrichtung eine geringe Anzahl von Förderwalzen vorgesehen werden kann, oder eine große Anzahl von Tragwalzen vorzusehen, welche in einem geringen Abstand voneinander vorgesehen sind. Hierdurch werden zwar die durch das Gewicht des Fördergutes verursachten Zugbelastungen des Förderbandes verringert, wodurch dieses mit einer geringeren Zugfestigkeit ausgebildet werden kann. Es muß jedoch eine große Anzahl von Tragwalzen vorgesehen werden, wodurch der konstruktive Aufwand vergrößert wird.

Aus der DE-AS 1 925 673 ist eine Förderanlage bekannt, bei welcher das Förderband auf der Oberseite von im Abstand voneinander angeordneten, quer zur Bewegungsrichtung des Förderbandes verlaufenden Balken befestigt ist und an den freien Enden der Balken Laufrollen gelagert sind, welche an der Unterseite von seitlich des Förderbandes angeordneten Schienen abrollen. Der Sinn dieser konstruktiven Gestaltung besteht darin zu gewährleisten, daß das Förderband in seinem Verlauf über die Förderstrecke einen U-förmigen Trog bildet, in welchem sich die beförderten Güter befinden, wogegen es in den beiden Endbereichen der Förderanlage in eine flache Form übergeführt wird, wodurch es über die dort befindlichen Umlenktrommeln herumgeführt werden kann. Eine Verminderung der auf das Förderband wirkenden Zugkräfte wird bei dieser bekannten Förderanlage jedoch nicht erzielt.

Aus der DE AS 1 060 780 ist weiters eine Förderanlage bekannt, bei welcher das Förderband an der Unterseite von Tragbalken befestigt ist. Um dabei einerseits das Förderband um die Umlenktrommeln herumführen zu können und um andererseits die für den Transport des Gutes erforderliche Transportmulde zu bilden, sind die Tragbalken mit einem Gelenk ausgebildet. Aufgrund dieses Gelenkes weist jedoch diese Förderanlage einen sehr aufwendigen Aufbau auf.

Aus der EP-A 0745545 ist weiters ein Förderband bekannt, bei welchem die Träger als einstückige Balken ausgebildet sind und das Förderband als Wellkantenförderband ausgebildet ist, wobei sich die Abschnitte der Wellkanten zwischen den Balken befinden und deren Enden an den Seitenflächen der Balken befestigt sind.

Sämtliche bekannte Förderanlagen sind entweder nur mit Tragschienen oder nur mit Tragseilen ausgebildet. Der gegenständlichen Erfindung liegt demgegenüber die Aufgabe zugrunde, eine Förderanlage zu schaffen, bei welcher die Vorteile der Tragschienen mit den Vorteilen der Tragseile kombiniert werden.

Diese Aufgabe wird erfindungsgemäß dadurch gelöst, daß die Trageinrichtungen über den Verlauf der Strecke durch Tragschienen oder anstelle derselben durch Tragseile gebildet sind und daß die an den freien Enden der Träger gelagerten Rollen mit einem Spurkranz zur Auflage auf den Tragschienen und mit einer neben dem Spurkranz befindlichen Spurrille zur Auflage auf den Tragseilen ausgebildet sind. Mittels der Tragseile können große Entfernungen überbrückt werden, wodurch mittels einer derartigen Förderanlage Güter auch über Täler hinweg transportiert werden können.

Der Gegenstand der Erfindung ist nachstehend anhand von in der Zeichnung dargestellten Ausführungssbeispielen näher erläutert. Es zeigen:
- Fig. 1: eine Ausführungsform einer erfindungsgemäßen Anlage, im Querschnitt,
- die Fig.2 und 3: einen Abschnitt dieser erfindungsgemäßen Anlage, in Draufsicht und in Seitenansicht, und
- Fig.4: eines der Enden dieser Anlage, in Seitenansicht.

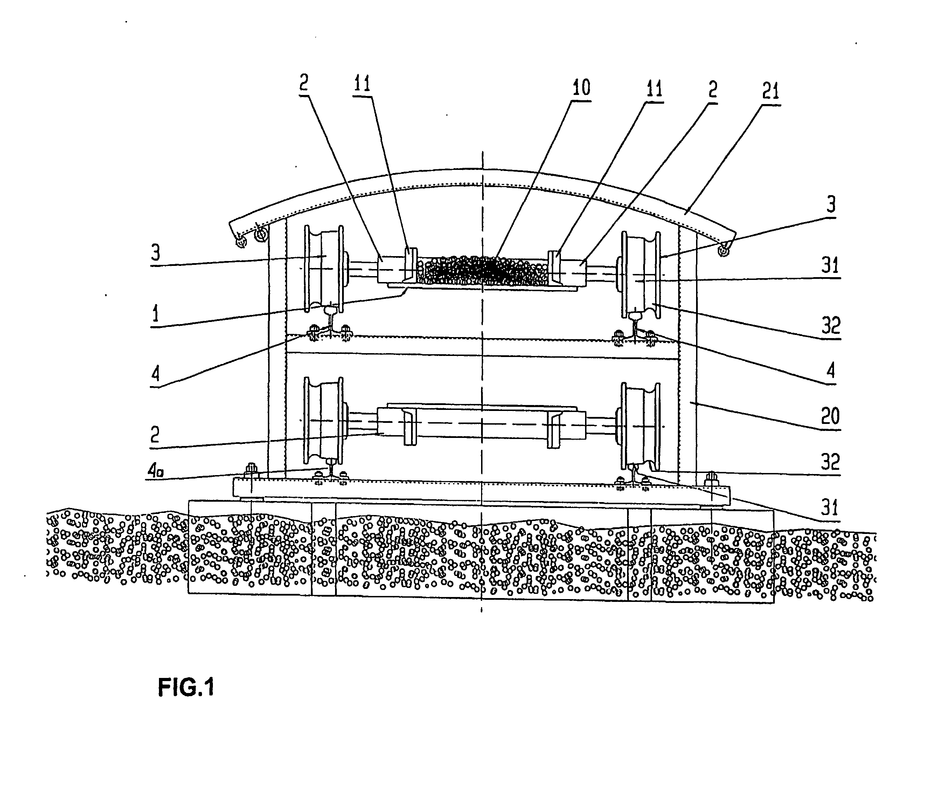

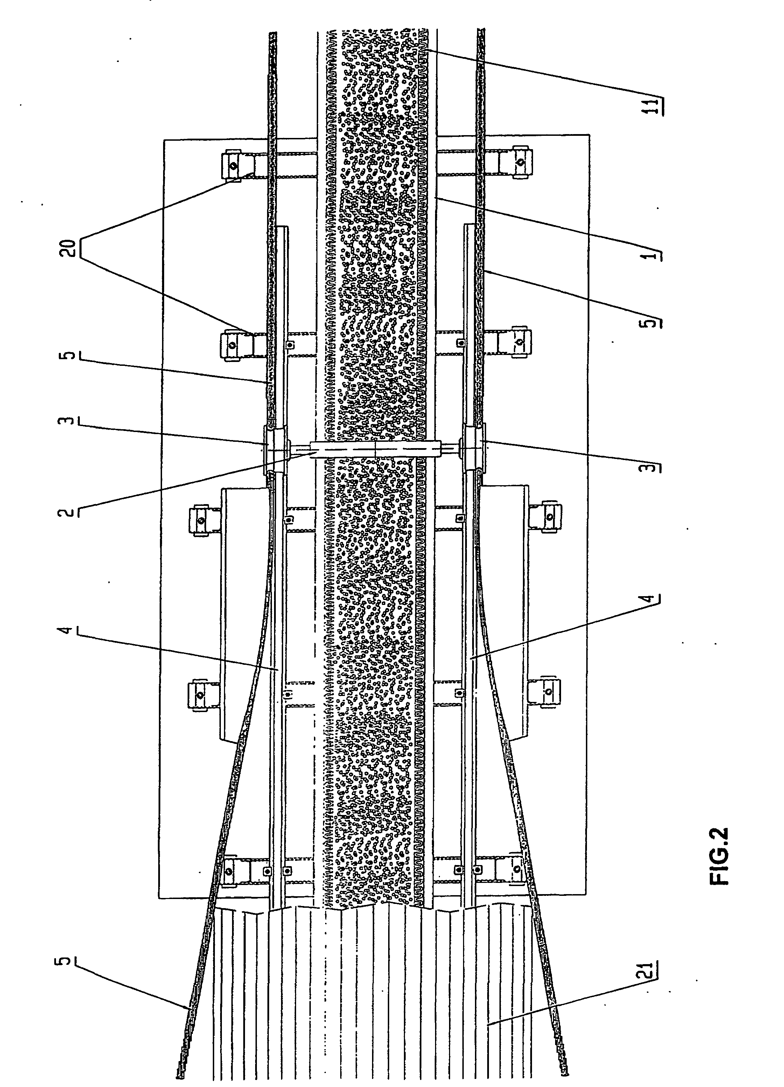

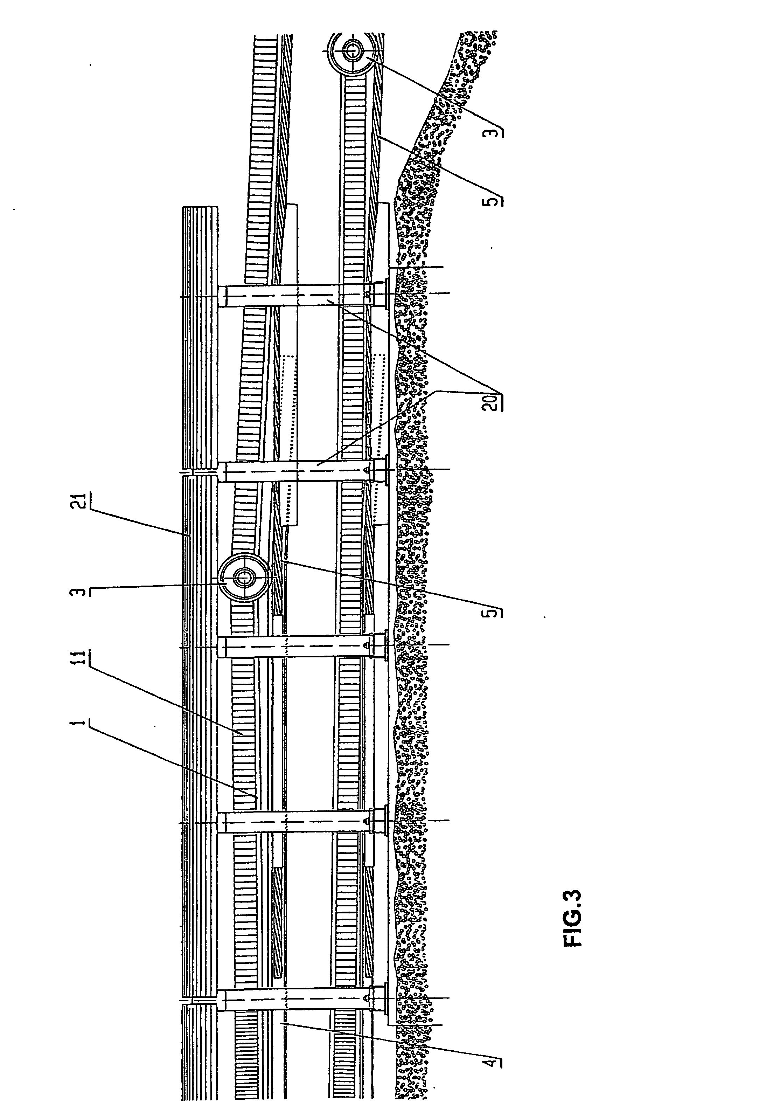

Wie dies aus den Fig.1 bis 3 ersichtlich ist, weist eine derartige Anlage zur Förderung von Gütern ein Förderband 1 auf, welches mit zwei seitlichen Wellkanten 11 ausgebildet ist, wodurch es im Querschnitt einen U-förmigen Trog bildet, in welchem Güter 10, z.B. Schüttgüter, transportierbar sind. Das Förderband 1 ist an quer zur Bewegungsrichtung des Förderbandes 1 ausgerichteten Tragbalken 2 befestigt, wobei es sich im Bereich des oberen Trumes des Förderbandes 1 an der Unterseite der Tragbalken 2 befindet. An den beiden Enden der Tragbalken 2 sind Rollen 3 gelagert, welche längs Tragschienen 4 abrollen.

Durch die Tragbalken 2, welche sich im Abstand voneinander befinden, werden im oberen Bereich des Förderbandes 1 Kammern gebildet, innerhalb welcher sich das Fördergut 10 befindet.

Auch dem unteren Trum des Förderbandes 1 sind Tragschienen 4a zugeordnet, längs welcher die am unteren Trum befindlichen Tragrollen 3 abrollen.

Die Tragschienen 4 und 4a befinden sich auf einer mit einem Dach 21 ausgebildeten Tragkonstruktion 20. Gegebenenfalls ist die gesamte Förderanlage mit einer Einhausung ausgebildet.

Dadurch daß das Förderband 1 an den Tragbalken 2 befestigt ist, an deren beiden Enden die Rollen 3 gelagert sind, welche längs der Tragschienen 4 abrollen, wird ein maßgeblicher Teil der durch das Fördergut erzeugten Belastung des Förderbandes 1 auf die Schienen 4 übertragen, wodurch durch das Förderband nur die für die Bewegung erforderliche Zugbelastung aufzunehmen braucht. Hierdurch kann das Förderband vergleichsweise schwach dimensioniert werden. Zudem befinden sich längs der Strecke der Förderanlage keine Tragwalzen, welche einer Wartung bedürfen bzw. welche im Falle von Beschädigungen ersetzt werden müssen. Da die Tragrollen 3 mit dem Förderband 1 zyklisch in die beiden Endstationen bewegt werden, können sie dort gewartet und allenfalls ausgetauscht werden.

Bei dieser Anlage sind weiters über den Verlauf der Strecke nicht nur Tragschienen 4, sondern anstelle derselben auch Tragseile 5 vorgesehen sind. Hierfür sind die Tragrollen 4 an ihrem Umfang einerseits mit zylindrischen Laufflächen 31 für die Tragschienen 4 und andererseits mit daneben befindlichen Spurrillen 32 für die Tragseile ausgebildet.

Der besondere Vorteil einer derartigen Anlage besteht darin, daß in solchen Bereichen des Geländes, in welchen eine Tragkonstruktion errichtet werden kann, diese mit Tragschienen ausgebildet sein kann, wogegen in solchen Bereichen, wo eine Tragkonstruktion Hindernisse bedingt oder Täler, Senken, Flüsse oder Bauwerke überspannt werden müssen, Tragseile vorgesehen sein können.

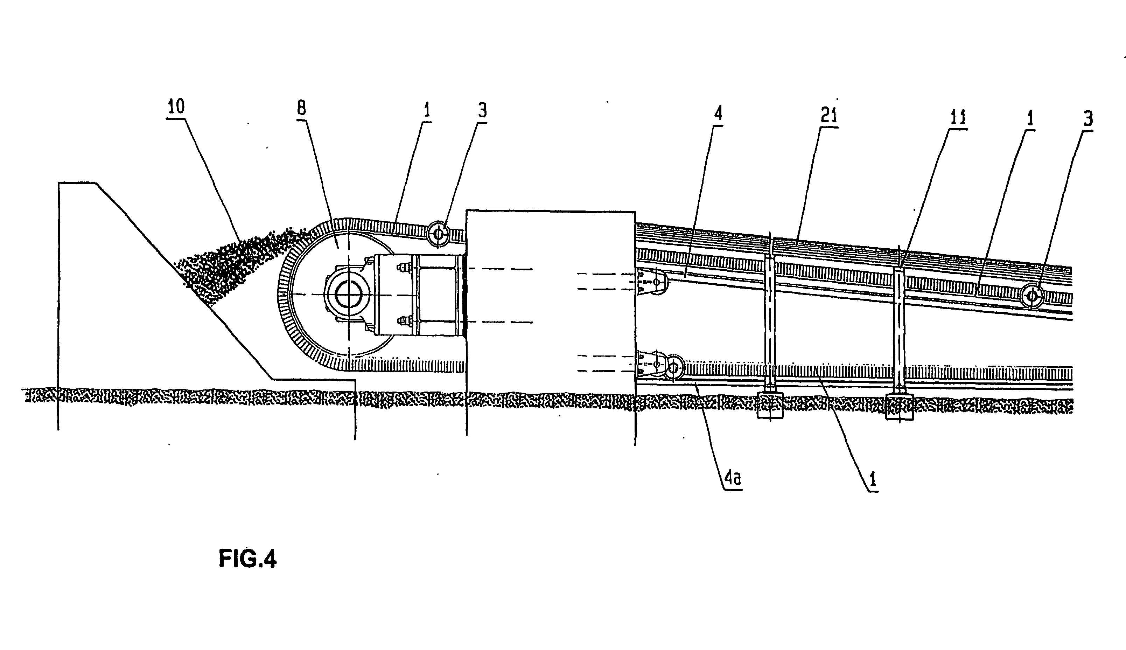

In Fig.4 ist schließlich eine Endstation einer derartigen Förderanlage dargestellt. Wie daraus ersichtlich ist, ist in der Endstation eine Umlenkwalze 8 angeordnet, um welche das Förderband 1 herumgeführt ist. In der dargestellten Endstation wird das vom oberen Trum des Förderbandes 1 geförderte Gut 10 abgegeben. Das untere Trum des Förderbandes 1 wird zur anderen Station zurückgeführt. Da auch die Tragrollen des unteren Trumes auf Tragschienen oder Tragseilen abrollen, braucht auch durch das untere Trum nur die zur Bewegung des Förderbandes 1 erforderliche Zugbelastung aufgenommen zu werden.

## Patentansprüche

1. Anlage zur Förderung von Gütern bzw. von Personen mittels eines in sich geschlossenen Förderbandes (1) od.dgl., welches an den beiden Enden der Anlage über Umlenktrommeln (8) geführt ist und welches mit in Förderrichtung voneinander im Abstand befindlichen, sich quer zum Förderband erstreckenden Trägern (2) ausgebildet ist, an deren beiden Enden Rollen (3) gelagert sind, welche längs Trageinrichtungen (4, 5) abrollen, das obere Trum des Förderbandes (1) od.dgl. an der Unterseite der Träger (2) angeordnet ist und die Rollen (3) od.dgl. auf der Oberseite der Trageinrichtungen (4, 5) abrollen, weiters die Träger als einstückige Balken (2) ausgebildet sind und das Förderband (1) als Wellkantenförderband ausgebildet ist, wobei sich die Abschnitte der Wellkanten (11) zwischen den Balken (2) befinden und deren Enden an den Seitenflächen der Balken (2) befestigt sind, **dadurch gekennzeichnet, daß** die Trageinrichtungen über den Verlauf der Strecke durch Tragschienen (4) oder anstelle derselben durch Tragseile (5) gebildet sind und daß die an den freien Enden der Träger (1) gelagerten Rollen (3) mit einem Spurkranz (31) zur Auflage auf den Tragschienen (4) und mit einer neben dem Spurkranz (31) befindlichen Spurrille (32) zur Auflage auf den Tragseilen (5) ausgebildet sind.

## Claims

1. An installation for conveying goods or people by means of an endless conveyor belt (1) or the like, which is guided at both ends of the installation over return drums (8) and which is constructed with supports (2) spaced from one another in the conveying direction and extending transversely relative to the conveyor belt, at the two ends of which supports (2) there are mounted rollers (3), which roll along supporting means (4, 5), the top run of the conveyor belt (1) or the like being arranged on the underside of the supports (2) and the rollers (3) or the like rolling on the top of the supporting means (4, 5), also the supports taking the form of one-piece beams (2) and the conveyor belt (1) taking the form of a corrugated side wall conveyor belt, the corrugated side wall portions (11) being located between the beams (2) and the ends thereof being attached to the side faces of the beams (2), **characterised in that** the supporting means take the form over the course of the path of supporting rails (4) or, instead, of supporting cables (5) and **in that** the rollers (3) mounted at the free ends of the supports (2) are constructed with a running rim (31) for resting on the supporting rails (4) and with a running groove (32) next to the running rim (31) for resting on the supporting cables (5) .

## Revendications

1. Installation de transport de produits ou de personnes à l'aide d'une bande de transport sans fin (1) ou similaire, guidée aux deux extrémités par des tambours inverseurs (8) et qui est munie de supports (2) perpendiculaires à la bande transporteuse se trouvant à une certaine distance entre eux dans le sens du transport, aux deux extrémités desquels se trouvent des galets (3) qui roulent le long de dispositifs de support (4,5), le brin supérieur de la bande transporteuse (1) ou similaire est disposé sur la partie inférieure du support (2) et les galets (3) ou similaires roulent sur la partie supérieure des dispositifs de support (4,5), les supports ont la forme de poutres monoblocs (2) et la bande transporteuse (1) a la forme d'une bande transporteuse à bords ondulés, moyennant quoi les parties des bords ondulés (11) se trouvant entre les poutres (2) et leurs extrémités sont fixées sur les faces latérales des poutres (2), **caractérisé en ce que** les dispositifs de support sont constitués, sur la trajectoire de transport, de rails de support (4) ou de câbles de support (5) et **en ce que** les galets (3) logés au niveau des extrémités libres des supports (2) sont munis d'une flasque (31) pour l'appui sur les rails de support (4) et d'une rainure (32) située à proximité de la flasque (31) pour l'appui sur les câbles de support (5).
